# EUROPEAN PATENT APPLICATION

(11) **EP 2 647 605 A1**
(43) Date of publication of application: **09.10.2013**
(21) Application number: 12163387.9
(22) Date of filing: 05.04.2012
(51) Int. Cl.: C03B 19/10, C03C 11/00

(54) **Method for production of foam glass pellets and pellets produced by this method**

(71) Applicant: Nof Nof Technology, SIA, 2015 Jurmala (LV)
(72) Inventor: Trumpels, Anatolijs, LV-2015 Jurmala (LV)
(74) Representative: Anohins, Vladimirs

(57) **Abstract**

The invention relates to the production of constructional materials, namely, foam glass pellets. The method for production of foam glass pellets according to the invention comprises the steps of: preparing a glass powder with amorphous silicon dioxide added to it; preparing an aqueous solution of an alkaline agent with a foaming agent added to it; intermixing said glass powder prepared as above with said aqueous solution prepared as above in order to obtain a composition with pelletizing said composition using a plate granulator in order to obtain wet green pellets, said amorphous silicon dioxide and alkaline agent being introduced into the composition in proportions that provide a chemical interaction between said amorphous silicon dioxide and alkaline agent resulting in the formation of sodium polysilicates between/among the particles of glass to bind the composition and cause a tight binding of the particles of glass during drying the wet green pellets; and drying said wet green pellets by heating them to a temperature within the range of 90°C to 120°C in order to obtain binded raw pellets. Said binded raw pellets are crushed using an alligator crusher or a roller crusher in order to obtain crushed raw pellets. Said crushed raw pellets are foamed in a rotary kiln at a temperature within the range of 700°C to 800°C, in order to obtain foam glass pellets of a nearly spherical shape.

## Description

The invention relates to the production of constructional materials, namely, foam glass pellets.

Foam silicate materials, to which foam glass pellets belong, are inorganic materials containing a significant gaseous phase in their volume. The process of obtaining such a material consists in preparing slurry consisting of a milled glass, a binder, and a foaming agent, drying the slurry, and subsequent heat curing at temperatures of 600°C to 900°C. In order to obtain foam glass pellets, a glass powder is pelletized with a solution containing a binder, the wet green pellets obtained in this way are dried and subsequently subjected to heat curing at a temperature within the range of 600°C to 900°C, which curing being attended by the foaming or sponging of the pellets due to that the gases arising from the decomposing of the binder inflate the liquid glass melt which has a high viscosity. Subsequent to operations of annealing and cooling, a porous material is obtained which has good heat-insulating properties and a high mechanical strength.

RU2162825 discloses a method for production of foam silicate materials including the steps of:
- crushing and drying a glass cullet;
- milling the glass;
- pelletizing the glass powder with an aqueous solution of water glass;
- drying the wet green pellets obtained in this way at a temperature within the range of 110°C to 120°C;
- scalping-out of fines using a swinging sieve;
- foaming the binded raw pellets in a rotary kiln together with a separating medium at a temperature within the range of 780°C to 820°C in order to obtain foam silicate pellets;
- annealing the foam silicate pellets to a temperature of 30°C; and
- removing the separating medium.

A required strength of the pellets is achieved by increasing the viscosity of the solution and removing the humidity from between/among the particles of glass during the drying step. This results in that the glass particles are glued together due to their irregular shape and adhesion forces. However, such pellets have a low water resistance, the process of obtaining the pellets requires too much energy which is needed to dry the glass cullet and wet green pellets, to foam the binded raw pellets at high temperatures, and to perform a two-staged heat curing. Furthermore, the drying process results in a partial sticking of the binded raw pellets together due to the release and condensation of water vapor, which leads to forming an uncertain pellet fraction or causing wastes and decrease of the thermoinsulating properties of the pellets. Thereat, it is impossible to obtain a specific fraction by a mechanic method, e.g., crushing the binded raw pellets, as those binded raw pellets are not homogenous in terms of volume, they have a relatively strong surface layer and an incompetent interior, therefore, they easily crumble when acted upon mechanically. This is due to that, as a result of drying the binded raw pellets obtained in this way, water evaporates from the surface of the pellets and crystalls of sodium silicate are formed predominantly near the surface of the pellets. Because of an insufficient water resistance and strength of these binded raw pellets, the storage and transportation thereof is not realistic.

The improvement of the strength performance and water resistance of the pellets is achieved by the method disclosed in EP1858817, the method being directed to forming a sodium silicate gel on the surface of particles of glass. In terms of the chemical processes and resulting product, this method is the closest prior art for the present invention. In the above method, that includes the steps of:
- preparing a binding aqueous solution of water glass, to which a glass powder and a foaming agent are added;
- homogenizing the composition;
- stirring the slurry during 2 to 6 hours;
- pelletizing; and
- drying and foaming (sponging) the pellets,
sodium silicate gel is formed on the surface of particles of glass as a result of milling the glass powder together with a water glass and protractedly, during several hours, intermixing them.

Obtaining sodium polysilicates gel on the surface of particles of glass can be achieved by adding amorphous silicon dioxide into the composition. The use of amorphous silicon dioxide as an ingredient of a binder is disclosed in RU2263084. This method includes the steps of:
- preparing a composition of water glass, amorphous silicon dioxide, and a foaming agent in proportions of 45-78%:20-45%:2-10%, respectively;
- pelletizing;
- covering the pellets with a mineral composition; and
- air hardening or kilning the pellets.

However, the use of the above ingredients in the above-specified proportions results in obtaining insufficiently strong pellets with a limited foaming (sponging) ability. Moreover, an inherent shortcoming of this method is an ineffective consumption of energy expended in the intermixing the composition.

The aim of the invention is to increase the productive capacity, to create a greater variety of products, to obtain a product that would be more convenient for the use in compositions, for storing and transportation, and to simplify the technology.

The method for production of foam glass pellets according to the invention comprises the steps of:
- preparing a glass powder with amorphous silicon dioxide added to it;
- preparing an aqueous solution of an alkaline agent with a foaming agent added to it;
- intermixing said glass powder prepared as above with said aqueous solution prepared as above in order to obtain a composition with pelletizing said composition using a plate granulator in order to obtain wet green pellets, said amorphous silicon dioxide and alkaline agent being introduced into the composition in proportions that provide a chemical interaction between said amorphous silicon dioxide and alkaline agent resulting in the formation of sodium polysilicates between/among the particles of glass to bind the composition and cause a tight binding of the particles of glass during drying the wet green pellets; and
- drying said wet green pellets by heating them to a temperature within the range of 90°C to 120°C in order to obtain binded raw pellets.

The most essential step of the above method for production of foam glass pellets is obtaining said binded raw pellets. The method of invention ensures rapidly forming the sodium polysilicates gel between/among the particles of glass binding the latter into a firm composition. Said sodium polysilicates gel is formed as a result of a chemical reaction between amorphous silicon dioxide and an alkaline agent. When the pellets are dried, the gel is solidifying thereby tightly binding the particles of glass due to a chemical reaction in the space between/among the particles of glass which results in forming crystalline hydrates.

The formation of sodium polysilicates gel between/among the particles of glass is achieved due to directionally synthesizing sodium polysilicates gel between/among the particles of glass by means of adding soluble silicates. Sodium polysilicates gel between/among the particles of glass may be formed directly in a composition containing an aqueous solution of sodium hydroxide and amorphous silicon dioxide. Silicon dioxide is dissolvable in alkaline solutions, specifically, solutions of sodium compounds. In order to dissolve silicon dioxide in an alkaline solution, particularly, in a solution of water glass, this silicon dioxide must be amorphous. Substances of this type include both synthetic materials (e.g., silica gel), and natural materials (e.g., rotten stone, diatomaceous earth). Decreasing the mass ratio of the sodium compounds (water glass or sodium hydroxide) to silicon dioxide in the composition leads to instability of the composition, forming a sodium polysilicates gel, and such gels may be sufficiently coarse at a low mass ratio of the sodium compounds to the amorphous silicon dioxide. Therefore, if a composition of a glass powder and an aqueous solution of a sodium silicate, e.g., water glass additionally includes a necessary amount of silicon compounds dissolvable in a water glass solution, then the mass ratio of the sodium compounds to silicon dioxide in the water glass solution, the aqueous solution of sodium silicate will interact with the amorphous silicon dioxide being exposed to a temperature within the range of 90°C to 120°C, and the composition will solidify.

The formation of wet green pellets is performed using a plate granulator. A glass powder and an aqueous solution of an alkaline agent are continuously fed to the plate granulator, and ready-made pellets are continuously spattering therefrom. Due to a continuous character of the process, an improved production effectiveness and a high performance are ensured due to a high velocity of stirring a mixture of glass powder and aqueous solution of alkaline agent resulting in obtaining wet green pellets. The pelletizing process performed using a plate granulator and subsequent transportation of the wet green pellets as well as the binded raw pellets can be easily automatized. When pelletizing the composition and transporting the wet green pellets and the binded raw pellets, they do not stick to the walls of containers forming stuck and caked blocks on the walls. Obtaining wet green pellets requires only little water (up to 10-12%), consequently, power consumption for drying and obtaining binded raw pellets is low.

The binded raw pellets obtained in this way have a high strength (upto 100 MPa and more) over the whole volume. They are water-resistant and therefore have a long shelf life. Such pellets are easy to transport, as they occupy less space than foam glass. Moreover, the binded raw pellets obtained according to the method of invention are binded due to the hardening of the sodium polysilicates present between/among the particles of glass over the whole volume of the binded raw pellets. Therefore, the binded raw pellets are homogenous over the whole volume, which provides obtaining, after crushing, crushed raw pellets which are homogenous over the whole volume as well.

The binded raw pellets are crushed using an alligator crusher or a roller crusher in order to obtain crushed raw pellets. Since the binded raw pellets have a high strength and are structurally homogenous, they may be crushed in order to obtain a narrow fraction of any size, including dimensions less than 0.2 mm.

The binded raw pellets are crushed using an alligator crusher or a roller crusher in order to obtain crushed raw pellets of a required size evaluated, in terms of linear dimensions, as about halfe as large as the required foam glass pellets.

The crushed raw pellets obtained as a result of crushing the binded raw pellets have a high strength (up to 100 MPa and more) over the whole volume. They are water-resistant and therefore have a long shelf life. Such pellets are easy to transport, as they occupy less space than foam glass. When necessary, they can be foamed and foam glass pellets can be obtained.

To foam the crushed raw pellets, a rotary kiln is used, the pellets being foamed at a temperature within the range of 700°C to 800°C, in order to obtain foam glass pellets of a nearly spherical shape. The crushed raw pellets having a non-regular shape when thermally treated within a rotary kiln, which treatment is accompanied by foaming, become semi-solid, they rub about one another within a layer, thereby reshaping into a nearly spherical shape.

The bulk density of the foam glass pellets resulted from the above process as the end product is within the range of 150 kg/m³ to 300 kg/m³ (dependent on the fraction), they have good thermal-insulating properties and high strength.

In the above-mentioned aqueous solution of alkaline agent, water glass may be used as the alkaline agent, and the powder may be pelletized using a plate granulator, the mass ratio of amorphous silicon dioxide to the water glass being within the range of 0.10 to 0.30.

It has been established experimentally that in case the mass ratio of amorphous silicon dioxide to water glass is less than 0.10, the crushed raw pellets easily soften and stick together during the thermal treatment, the foam glass pellets having a low water resistance because of excess of sodium compounds, i.e., the water glass. In case the mass ratio of amorphous silicon dioxide to water glass is more than 0.30, the foaming of the crushed raw pellets during the thermal treatment is imperfect, which results in low heat-insulating characteristics of the foam glass pellets.

In the above-mentioned aqueous solution of alkaline agent, sodium hydroxide may be used as the alkaline agent, and the powder may be pelletized using a plate granulator, the mass ratio of amorphous silicon dioxide to the sodium hydroxide being within the range of 4 to 10.

Actually, water glass is a product of a chemical reaction between a solution of sodium hydroxide and amorphous silicon dioxide. Therefore, in order to cause the transition of the solution of water glass into the solid state, silicon dioxide should be added. In case if only sodium hydroxide and silicon dioxide are used, what is produced first is a solution of water glass, then this solution enters into reaction with an extra amorphous silicon dioxide. Therefore, in case of use of sodium hydroxide, the mass ratio of amorphous silicon dioxide to the sodium hydroxide should be within the range of 4 to 10.

It has been established experimentally that in case the mass ratio of amorphous silicon dioxide to sodium hydroxide is less than 4, the crushed raw pellets easily soften and stick together during the thermal treatment, the foam glass pellets having a low water resistance because of excess of sodium compounds, i.e., the sodium hydroxide. In case the mass ratio of amorphous silicon dioxide to sodium hydroxide is more than 10, the foaming of the crushed raw pellets during the thermal treatment is imperfect, which results in low heat-insulating characteristics of the foam glass pellets.

### Example 1

1000 kg of an ungraded glass cullet and 15 kg of silica gel were ground using a dry-milling ball mill to obtain a powder passing through a sieve with openings size of 80 microns. A solution of 160 l of water, 60 l of water glass as an alkaline agent (mass density 1.41 g/ml), and 5 kg of sugar as a foaming agent was prepared separately. The powder obtained as described above was pelletized using a plate granulator and the solution obtained as described above was added, the mass ratio of amorphous silicon dioxide to the alkaline agent being equal to 0.18. Then the wet green pellets obtained in this way were dried in a dryer (preferably a cylinder open-end dryer) at a temperature within the range of 90°C to 120°C during 10-15 minutes untill the wet green pellets set due to the chemical fixation of exessive water into sodium polysilicates crystalline hydrates. The binded raw pellets obtained in this way have a high strength (upto 100 MPa and more) over the whole volume. They are water-resistant and therefore have a long shelf life. Such pellets are easy to transport, as they occupy less space than foam glass. To obtain foam glass pellets of a desired fracture, the binded raw pellets were crushed using a crusher of any type (however, crushers with a low dusting, e.g., an alligator crusher or a roller crusher are preferable) in order to obtain crushed raw pellets of a required size, that characterizes in linear dimensions about halfe as large as the required foam glass pellets. The crushed raw pellets obtained in this way, which have an irregular shape, with a powdering agent (a material used to prevent sticking the pellets together at a temperature; usually, kaolin is used as powdering agent) added, were subject to thermal treatment at a temperature of 760°C. During the thermal treatment, said crushed raw pellets rub about one another within a layer and, due to their plasticity, they take a nearly spherical shape. The bulk density of the foam glass pellets resulted from the above process is within the range of 150 kg/m³ to 300 kg/m³ (dependent on the fraction).

### Examples 2-6

Foam glass pellets were produced according to the process described in Example 1 above, the ingredients being used in quantities shown in Table 1 below.

**Table 1. Examples of the composition for producing foam glass pellets with water glass used as alkaline agent**

| Example No. | Glass cullet, kg | Amorphous silicon dioxide, kg | Water glass, kg (l) | Mass ratio Amorphous silicon dioxide to Alkaline agent | Water, I | Foaming agent, kg | Comments |
|---|---|---|---|---|---|---|---|
| 2 | 1000 | 10 (silica gel) | 84.6 (60) | 0.12 | 160 | 5 (glycerin) | |
| 3 | 1000 | 25 (silica gel) | 84.6 (60) | 0.30 | 160 | 10 (sugar) | |
| 4 | 1000 | 8 (silica gel) | 84.6 (60) | 0.09 | 160 | 5 (sugar) | The foam glass pellets have a low water resistance because of excess of water glass |
| 5 | 1000 | 30 (silica gel) | 84.6 (60) | 0.35 | 160 | 5 (sugar) | The crushed raw pellets are foaming imperfectly because of excess of amorphous silicon dioxide |
| 6 | 1000 | 20 (rotten stone) | 84.6 (60) | 0.24 | 160 | 5 (sugar) | |

### Example 7

1000 kg of an ungraded glass cullet and amorphous silicon dioxide - 100 kg of rotten stone were ground using a dry-milling ball mill to obtain a powder passing through a sieve with openings size of 80 microns. A solution of 200 l of water, 25 kg of sodium hydroxide (NaOH) as an alkaline agent, and 5 kg of sugar as a foaming agent was prepared separately. The powder obtained as described above was pelletized using a plate granulator and the solution obtained as described above was added, the mass ratio of amorphous silicon dioxide to the alkaline agent being equal to 4. Then the wet green pellets obtained in this way were dried in a dryer (preferably a cylinder open-end dryer) at a temperature within the range of 90°C to 120°C during 10-15 minutes untill the wet green pellets set due to the chemical fixation of exessive water into sodium polysilicates crystalline hydrates. The binded raw pellets obtained in this way are structurally homogenous and have a high strength (upto 100 MPa and more) over the whole volume. They are water-resistant and therefore have a long shelf life. Such pellets are easy to transport, as they occupy less space than foam glass. To obtain foam glass pellets of a desired fracture, the binded raw pellets were crushed using a crusher of any type (however, crushers with a low dusting, e.g., an alligator crusher or a roller crusher are preferable) in order to obtain crushed raw pellets of a required size, that characterizes in linear dimensions about halfe as large as the required foam glass pellets. The crushed raw pellets obtained in this way, which have an irregular shape, with a powdering agent (a material used to prevent sticking the pellets together at a temperature; usually, kaolin is used as powdering agent) added, were subject to thermal treatment at a temperature of 760°C. During the thermal treatment, said crushed raw pellets rub about one another within a layer and, due to their plasticity, they take a nearly spherical shape. The bulk density of the foam glass pellets resulted from the above process is within the range of 150 kg/m³ to 300 kg/m³ (dependent on the fraction).

### Examples 8-14

Foam glass pellets were produced according to the process described in Example 7 above, the ingredients being used in quantities shown in Table 2 below.

**Table 2. Examples of the composition for producing foam glass pellets with sodium hydroxide used as alkaline agent**

| Example No. | Glass cullet, kg | Amorphous silicon dioxide, kg | Sodium hydroxide, kg | Mass ratio Amorphous silicon dioxide to Alkaline agent | Water, I | Foaming agent, kg | Comments |
|---|---|---|---|---|---|---|---|
| 8 | 1000 | 100 (rotten stone) | 15 | 6.7 | 200 | 5 (glycerin) | |
| 9 | 1000 | 100 (rotten stone) | 10 | 10 | 200 | 5 (sugar) | |
| 10 | 1000 | 100 (rotten stone) | 27 | 3.7 | 200 | 5 (sugar) | The foam glass pellets have a low water resistance because of excess of sodium hydroxide |
| 11 | 1000 | 100 (rotten stone) | 8 | 12.5 | 200 | 5 (sugar) | The crushed raw pellets are foaming imperfectly because of deficit of sodium hydroxide |
| 12 | 1000 | 100 (diatomac eous earth) | 15 | 6.7 | 200 | 7 (sugar) | |
| 13 | 1000 | 100 (diatomac eous earth) | 20 | 5 | 200 | 5 (sugar) | |
| 14 | 1000 | 100 (silica gel) | 20 | 5 | 200 | 4 (sugar) | |

The method of invention ensures an increase of effectiveness and simplification of the technology of production of foam glass pellets, and the pellets produced according to this method may be used as either binded raw pellets or crushed raw pellets convenient for the use in compositions, for transportation and storage, or foam glass pellets having high characteristics of strength and heat insulation, the pellets being produced by a technologically effective method with a low energy consumption and high performance.

Amorphous silicon dioxide and an alkaline agent are used as ingredients of the composition at a ratio ensuring a chemical interaction between these ingredients resulting in the formation of sodium polysilicates, which make the composition an integral whole. Thereat, no migration of soluble compounds to the surface of the pellets occurs, as it happens in usual drying. Therefore, the technical solution according to the invention gives an unexpected and unobvious effect - the formation of a strong composition homogenous over the whole volume of pellets. Thereat, the gel formed between/among the particles of glass in the form of hydrated sodium polysilicate can evolve water vapor during a thermal treatment at a temperature within the range of 700°C to 750°C, which, make matters worse, makes the composition to foam.

## Claims

1. Method for production of foam glass pellets comprising the steps of:
- preparing a glass powder with amorphous silicon dioxide added to it;
- preparing an aqueous solution of an alkaline agent with a foaming agent added to it;
- intermixing said glass powder prepared as above with said aqueous solution prepared as above in order to obtain a composition with pelletizing said composition using a plate granulator in order to obtain wet green pellets, said amorphous silicon dioxide and alkaline agent being introduced into the composition in proportions that provide a chemical interaction between said amorphous silicon dioxide and alkaline agent resulting in the formation of sodium polysilicates between/among the particles of glass to bind the composition and cause a tight binding of the particles of glass during drying the wet green pellets; and
- drying said wet green pellets by heating them to a temperature within the range of 90°C to 120°C in order to obtain binded raw pellets.

2. The method according to claim 1, **characterized in that**, in said solution, water glass is used as alkaline agent, and said powder is pelletized with the solution using a plate granulator at the mass ratio of amorphous silicon dioxide to water glass within the range of 0.10 to 0.30.

3. The method according to claim 1, **characterized in that**, in said solution, sodium hydroxide is used as alkaline agent, and said powder is pelletized with the solution using a plate granulator at the mass ratio of amorphous silicon dioxide to sodium hydroxide within the range of 4 to 10.

4. The method according to any of claims 1-3, **characterized in that** said binded raw pellets are crushed using an alligator crusher or a roller crusher in order to obtain crushed raw pellets.

5. The method according to claim 4, **characterized in that** said binded raw pellets are crushed using an alligator crusher or a roller crusher in order to obtain crushed raw pellets of a required size evaluated in terms of linear dimensions about halfe as large as the required foam glass pellets.

6. The method according to any of claims 4 or 5, **characterized in that** said crushed raw pellets are foamed in a rotary kiln at a temperature within the range of 700°C to 800°C, in order to obtain foam glass pellets of a nearly spherical shape.

7. Pellets produced by the method according to any of claims 1-6.

8. Pellets according to claim 7 produced as binded raw pellets.

9. Pellets according to claim 7 produced as crushed raw pellets.

10. Pellets according to claim 7 produced as foam glass pellets of a nearly spherical shape.
